# EUROPEAN PATENT SPECIFICATION

(11) **EP 3 200 401 B1**
(45) Date of publication and mention of the grant of the patent: **05.12.2018**
(21) Application number: 17150826.0
(22) Date of filing: 10.01.2017
(51) Int. Cl.: H04L 12/40, H04L 12/28, H04L 29/08

(54) **COUPLING SYSTEM FOR ELECTRONIC DEVICE**
KUPPLUNGSSYSTEM FÜR ELEKTRONISCHE VORRICHTUNG
SYSTÈME DE COUPLAGE POUR DISPOSITIF ÉLECTRONIQUE

(30) Priority: 30.01.2016 CN 201610063121
(43) Date of publication of application: 02.08.2017
(73) Proprietor: Hongfujin Precision Electronics (Chongqing) Co. Ltd, Shapingba District ChongQing Chongqing (CN); Hon Hai Precision Industry Co., Ltd., New Taipei City (TW)
(72) Inventor: LIN, CHING-CHUNG, New Taipei (TW)
(74) Representative: CMS Cameron McKenna Nabarro Olswang LLP

(56) References cited:
- EP-A2- 2 175 696
- US-A1- 2010 020 583
- US-A1- 2012 122 059

## Description

### FIELD

The subject matter herein generally relates to data transmission technology.

### BACKGROUND

Electronic devices, such as electronic white boards, are coupled to slave devices, such as mobile phones, universal serial buses (USBs), and so on. The slave devices can be connected to the main electronic devices in parallel. US20120122059A1 discloses that a robotics construction kit that serves as a platform for children to engage in problem-solving and innovative thinking in science, technology, engineering, and mathematics. By designing and building robotics constructions from an apparently simple set of blocks that encapsulate the kinetic, electronic, and software elements of robots, children and others can encounter, explore, and experiment with basic principles of science and computation. Unlike existing robotics construction kits for education, the present invention embodies computation in every element, which affords understanding systems of distributed computation, rather than systems of top-down control. EP2175696A2 discloses a polyhedral. The surface of the polyhedral is formed by connection of a plane having a plurality of hexagons and a plane having a plurality of quadrilaterals. There are six hexagonal connected to form a ring covering the surface of the polyhedral. On the surface of the polyhedral, any two connected hexagons form a contained angle of 120 degrees. The polyhedral has a light source and an electric control circuit disposed therein. A plurality of polyhedron can be connected into a multi-media light assembly having a numerical display function or a clock function.

### BRIEF DESCRIPTION OF THE DRAWINGS

Implementations of the present technology will now be described, by way of example only, with reference to the attached figures.
FIG. 1 is a sketch isometric view of one embodiment of an electronic device of an electronic device coupling system.
FIG. 2 is a sketch isometric view of a master device and a plurality of slave devices of the electronic device coupling system of FIG. 1.
FIG. 3 is a sketch isometric view of the master device coupled to a plurality of slave devices of the electronic device coupling system of FIG. 1.
FIG. 4 is a block sketch view of the master device coupled to a plurality of slave devices of the electronic device coupling system of FIG. 1.
FIG. 5 is a block diagram of the master device of the electronic device coupling system of FIG. 1.
FIG. 6 is a block diagram of a slave device of the electronic device coupling system of FIG. 1.
FIG. 7 shows a window of a display module showing a power supply state of the electronic device coupling system of FIG. 1.
FIG. 8 shows a power supply coupled to the master device and a plurality of slave devices of the electronic device coupling system of FIG. 1.
FIG. 9 is a sketch view of a plurality of master devices coupled to a plurality of slave devices of the electronic device coupling system of FIG. 1.
FIG. 10 is a sketch view of a plurality of master devices wirelessly or wired coupled to a plurality of slave devices of the electronic device coupling system of FIG. 1.
FIG. 11 is a sketch view of a public device coupled to a plurality of slave devices of the electronic device coupling system of FIG. 1.
FIG. 12 is a sketch view of the public device wirelessly or wired coupled to a customization group of the electronic device coupling system of FIG. 1.
FIG. 13 shows a setting window, which showing the electronic device entering a customization group setting.
FIG. 14 shows a display window after the customization group setting is finished.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, methods, procedures, and components have not been described in detail so as not to obscure the related relevant feature being described. Also, the description is not to be considered as limiting the scope of the embodiments described herein. The drawings are not necessarily to scale and the proportions of certain parts may be exaggerated to better illustrate details and features of the present disclosure.

Several definitions that apply throughout this disclosure will now be presented.

The term "coupled" is defined as connected, whether directly or indirectly through intervening components, and is not necessarily limited to physical connections. The connection can be such that the objects are permanently connected or releasably connected. The term "comprising," when utilized, means "including, but not necessarily limited to"; it specifically indicates open-ended inclusion or membership in the so-described combination, group, series, and the like.

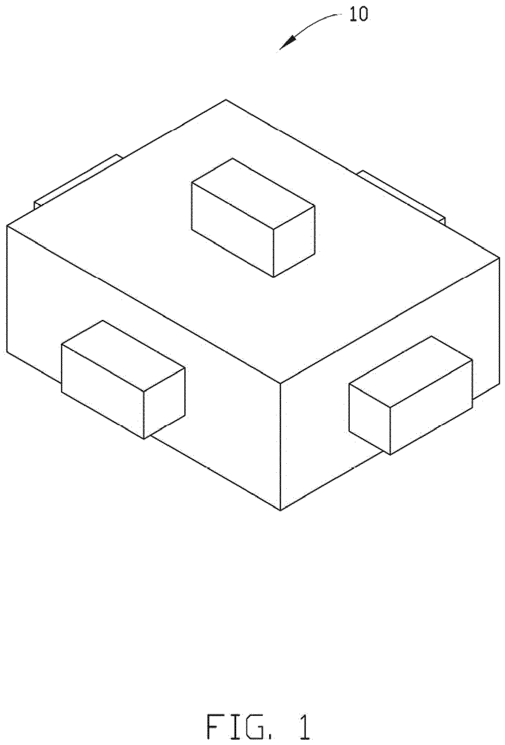

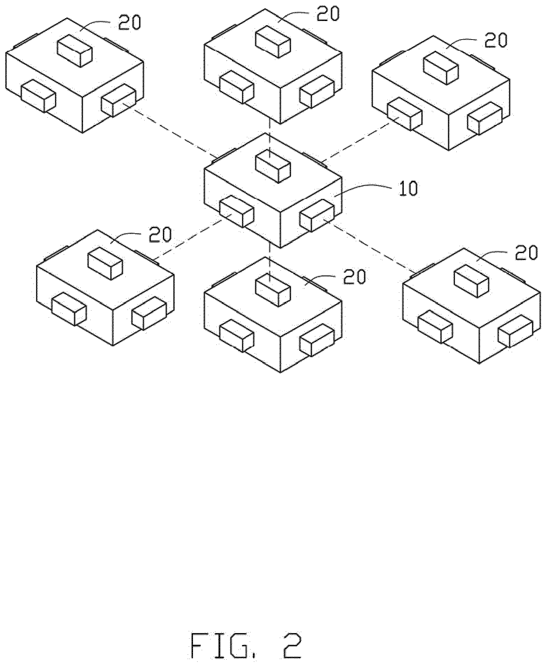

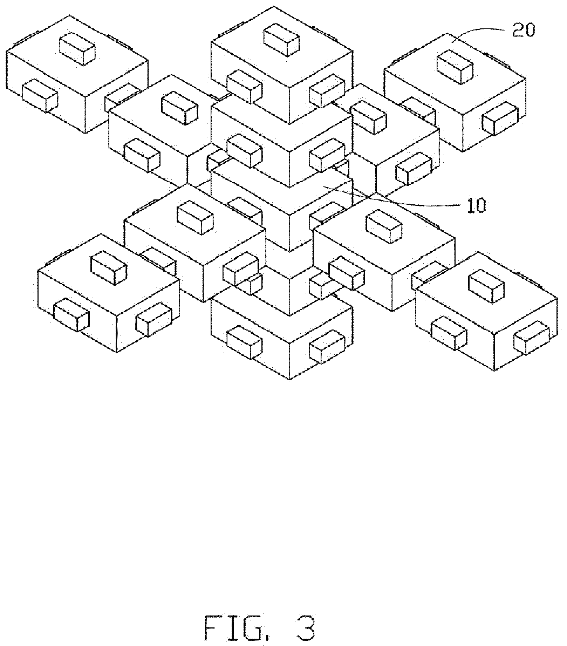

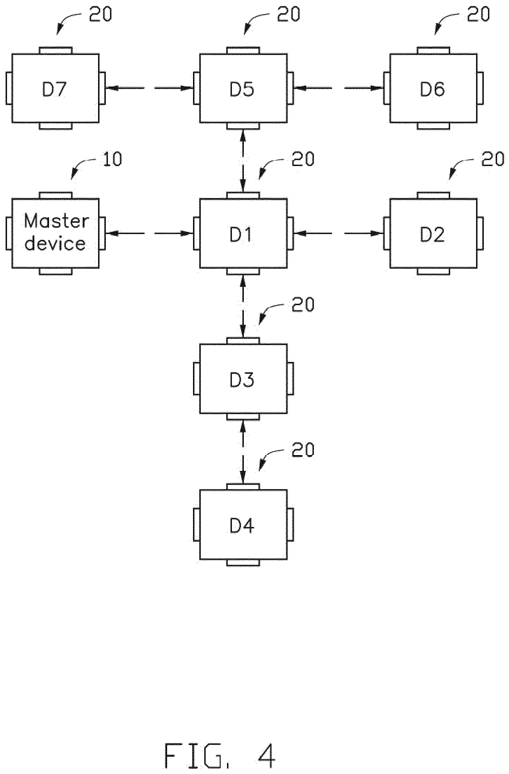

FIGS. 1-4 illustrate an electronic device coupling system in accordance with an embodiment. The electronic device coupling system can include a plurality of electronic devices, which can include a master devices 10 and a plurality of slave devices 20 coupleable to the master device 10 one by one in at least a train. In at least one embodiment, the at least a train can include two trains extending in two directions, one of the slave devices 20 is coupled to the master device 10 directly, and the other slave devices 20 are coupled to the master devices 10 one by one in X axis direction, Y axis direction, or Z axis direction. In other embedment, the plurality of electronic devices can include more than one master device, each electronic device can be the master device or the slave device according to usage. In at least one embodiment, each electronic device can be a mobile phone, a remoter, a tablet, a notebook, a washing machine, a refrigerator, an electric cooker, an induction cooker, a roaster, an air condition, a mouse, a keyboard, a camera, a microphone, a power supply, a voice box, a set box, a tuner box, or other WIFI device, or Bluetooth device, or RF device.

The slave devices 20 can cascade together in a plurality of directions, which has at least six directions (X, Y, Z), to build an array platform, to which the slaves devices 20 can coupled unlimitedly. Each electronic device has a plurality of coupling bus-bars each corresponding to one of the plurality of directions. The plurality of coupling bus-bars are a plurality of paired male and female coupling bus-bars. Two of the electronic devices are coupled together by corresponded two coupling bus-bars. Each coupling bus-bar can include a plurality of different types of coupling ports, such as power port, hot plug port, HDMI port, DP port, USB port, control port, MHL port, e-SATA port, LVDS port, V by one port, mipi port, and so on. Each port is coupled to a multiway switches, which is configured to couple to other ports having same type of local device or other electronic devices. In order to expediently describe, each electronic device only has four coupling bars in four different directions are disclosed.

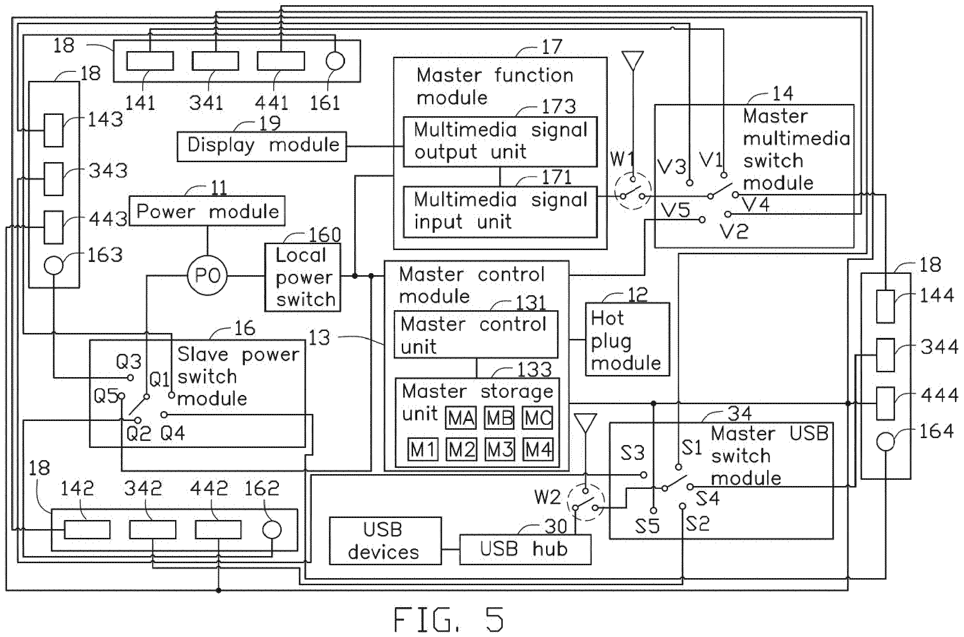

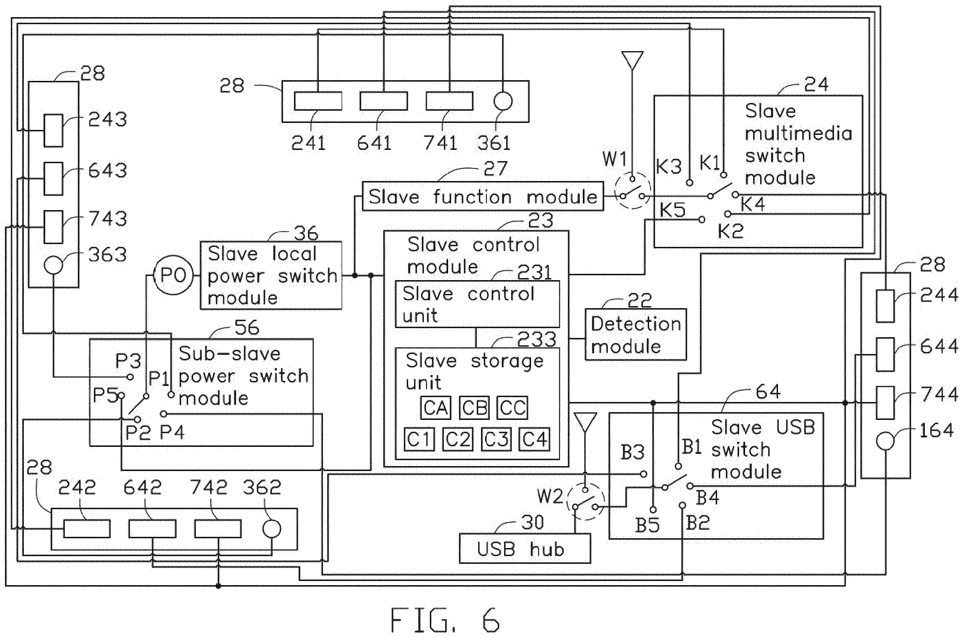

FIG. 5 and 6 illustrate the master device 10 can include a power module 11, a hot plug module 12, a master control module 13, a master multimedia switch module 14, a slave power switch module 16, a local power switch 160, and a master function module 17. The master control module 13 can be a micro control unit (MCU) of the master device 10, the maser function module 17 can be display module, audio module, etc. controlled by the MCU. Each slave device 20 has a same structure with the master device 10 or can be a socket structure, which is the master device 10 without the master function muddle and the power module.

The power module 11 is configured to supply power to the slave devices 20 coupled to the master device 10.

The hot plug module 12 is configured to determine whether a slave device 20 is coupled to the master device 10, if yes, the hot plug module 12 outputs a high level voltage signal to switch on a corresponded path of the slave power switch module 16; if no, the hot plug module 12 outputs a low level voltage. In at least one embodiment, the hot plug module 12 includes a pull-down resistor coupled to a male coupling bar and a pull-up resistor coupled to a female coupling bar.

The master function module 17 can include a multimedia signal input unit 171 and a multimedia signal output unit 173. The multimedia signal includes audio signal and video signal. The multimedia signal input unit 171 is configured to receive multimedia signal sent from the master control module 13 and the slave device 10. The multimedia signal sent from the master control module 13 can be local or received wirelessly/wired from other device. A multimedia signal switch W1 is configured to switch along local, wirelessly, and wired to choose a receiving/sending way of the multimedia signal. The multimedia signal output unit 173 is configured to output wirelessly/wired the multimedia signal received from the multimedia signal input unit 171 to a display module 19.

The master multimedia switch module 14 can include a plurality of multimedia switch paths. A first end of each multimedia switch path is coupled to the multimedia signal input unit 171. In this embodiment, a second end of a first multimedia switch path V1 is coupled to a master top multimedia port 141; a second end of a second multimedia switch path V2 is coupled to a master bottom multimedia port 142; a second end of a third multimedia switch path V3 is coupled to a master left multimedia port 143; a second end of a fourth multimedia switch path V4 is coupled to a master right multimedia port 144; and a second end of a fifth multimedia switch path V5 is coupled to the master control module 13. In other embodiment, the number of the plurality of multimedia switch paths can be decreased or increased accordingly.

Accordingly, each slave device 20 includes a slave multimedia switch module 24. The slave multimedia switch module 24 can include a plurality of multimedia switch paths. A first end of each multimedia switch path is coupled to a slave function module 27. In this embodiment, a second end of a first multimedia switch path K1 is coupled to a slave top multimedia port 241; a second end of a second multimedia switch path K2 is coupled to a slave bottom multimedia port 242; a second end of a third multimedia switch path K3 is coupled to a slave left multimedia port 243; a second end of a fourth multimedia switch path K4 is coupled to a slave right multimedia port 244; and a second end of a fifth multimedia switch path K5 is coupled to a slave control module 23. In other embodiment, the number of the plurality of multimedia switch paths can be decreased or increased accordingly.

The master device 10 can further include a USB hub 30 and a master USB switch module 34. The USB hub 30 is coupled to a plurality of USB devices, such as hard disk drive and input devices, such as keyboard, computer mouse, and write pad. The master USB switch module 34 can include a plurality of USB switch paths. A first end of each USB switch path is coupled to the USB hub 30. In this embodiment, a second end of a first USB switch path S1 is coupled to a master top USB port 341; a second end of a second USB switch path S2 is coupled to a master bottom USB port 342; a second end of a third USB switch path S3 is coupled to a master left USB port343; a second end of a fourth USB switch path S4 is coupled to a master right USB port 344; and a second end of a fifth USB switch path S5 is coupled to the master control module 13. In other embodiment, the number of the plurality of USB switch paths can be decreased or increased accordingly.

Accordingly, each slave device 20 includes a slave USB switch module 64. The slave USB switch module 64 can include a plurality of USB switch paths. A first end of each USB switch path is coupled to a USB hub 30. In this embodiment, a second end of a first USB switch path B1 is coupled to a slave top USB port 641; a second end of a second USB switch path B2 is coupled to a slave bottom USB port 642; a second end of a third USB switch path B3 is coupled to a slave left USB port 643; a second end of a fourth USB switch path B4 is coupled to a slave right USB port 644; and a second end of a fifth USB switch path B5 is coupled to a slave control module 23. In other embodiment, the number of the plurality of USB switch paths can be decreased or increased accordingly.

The plurality of USB devices can be used by any slave device 20 coupled to the master device 10. For example, the hard disk drive can be taken as a storage of the slave device, and the input device can operation the slave device 20.

The master device 13 can include a master control unit 131 and a master storage unit 133. The master storage unit 133 can include a master information storage MA, a slave code storage MC, a soft code storage MB, a slave information storage M1, a master power storage M2, a slave power storage M3, and a slave total power storage M4.

The master control unit 131 is coupled to the slave control modules 23 of all the slave device 20 coupled to the master device 10 and configured to obtain all the information of each slave device 20 and store the information to corresponding storages. The master control unit 131 sets a group slave codes according to a coupling sequence of the coupled slave devices 20. The master device 10 has a master code of a first number of the coupling sequence. Each slave device 20 stores the master code and slave codes of other slave devices coupled together.

That is, when the master device 10 is coupled to the plurality of slave devices 20 one by one, this electronic devices are coupled to an electronic system, and each electronic device has an IP code according to the coupling sequence in the electronic system.

The master information storage MA is configured to store the master information of the master device 10. The master information include address code, such as ID code and IP code, device model, such as iphone 6s, I/O type, and master soft control code etc.. The master soft control code can include brightness adjustment control code, channel adjustment control code, volume adjustment control code, power on/off etc..

The slave code storage MC is configured to store slave codes and coupling paths of each slave device 20. Referring to FIG. 1, the slave code D1 is the slave device firstly coupled to the master device, and the coupling path is V-V4, K-K4. The slave code D2 is the slave device secondly coupled to the master device, and the coupling path is V-V4-S, K-K4-B4. The slave code D3 is the slave device thirdly coupled to the master device, and the coupling path is V-V4-S2, K-K4-B2. The slave code D4 is the slave device fourthly coupled to the master device, and the coupling path is V-V4-S2-S2. The slave code D5 is the slave device fifthly coupled to the master device, and the coupling path is V-V4-S, K-K4-B1. The slave code D6 is the slave device sixthly coupled to the master device, and the coupling path is V-V4-S1-S, K-K4-B1-B4. The slave code D7 is the slave device seventhly coupled to the master device, and the coupling path is V-V4-S1-S3, K-K4-B1-B3.

The soft code storage MB is configured to store the soft code of each slave device 20. When the slave device 20 is a bulb, the soft code can be power on/off code and brightness code; when the slave device 20 is a radio, the soft code can be power on/off code, channel code, and volume code; and when the slave device 20 is a TV, the soft code can be power on/off code, channel code, volume code, brightness code, and grayscale code.

The slave information storage M1 is configured to store the slave information of each slave device 20. The slave information include address code, such as ID code and IP code, device model, such as iphone 6s, I/O type etc..

The master power storage M2 is configured to store rated power of the master device 10, such as 90W.

The slave power storage M3 is configured to store rated power of each slave device 20, such as 25W, 50W, and 5W.

The slave total power storage M4 is configured to store total power of all the coupled slave devices 20. In this embodiment, the total power is 80W.

The local power switch 160 is coupled to the master function module 17 and the master control module 13 and configured to switch on/off a connection from the power module 11 to the master function module 17 and the master control module 13 by pressing a power on/off key of the mater device 10.

The slave power switch module 16 can include a plurality of power switch paths. A first end of each power switch path is coupled to the power module 11. In this embodiment, a second end of a first power switch path Q1 is coupled to a master top power port 161; a second end of a second power switch path Q2 is coupled to a master bottom power port 162; a second end of a third power switch path Q3 is coupled to a master left power port 163; a second end of a fourth power switch path Q4 is coupled to a master right power port 164; and a second end of a fifth power switch path Q5 is coupled between the local power switch 160 and the master control module 13. In other embodiment, the number of the plurality of power switch paths can be decreased or increased accordingly.

Accordingly, each slave device 20 includes a slave local power switch module 36 and a sub-slave power switch module 56. A first terminal of the slave local power switch module 36 is coupled to a slave function module 27 and a slave control module 23. The sub-slave power switch module 56 can include a plurality of slave power switch paths. A first end of each power switch path is coupled to a second terminal of the slave local power switch module 36. In this embodiment, a second end of a first slave power switch path R1 is coupled to a slave top power port 361; a second end of a second slave power switch path R2 is coupled to a slave bottom power port 362; a second end of a third slave power switch path R3 is coupled to a slave left power port 363; a second end of a fourth power switch path R4 is coupled to a slave right power port 364; and a second end of a fifth power switch path R5 is coupled to the first terminal of the slave local power switch module 36. In other embodiment, the number of the plurality of power switch paths can be decreased or increased accordingly.

The slave codes and coupling paths of each slave device 20 stored in the slave code storage MC further include master power ports coupling paths and slave power ports coupling paths. In this embodiment, the slave code D1 is the slave device firstly coupled to the master device, and the coupling path is V-V4, K-K4, Q-Q4. The slave code D2 is the slave device secondly coupled to the master device, and the coupling path is V-V4-S4, K-K4-B4, Q-Q4-R4. The slave code D3 is the slave device thirdly coupled to the master device, and the coupling path is V-V4-S2, K-K4-B2, Q-Q4-R2. The slave code D4 is the slave device fourthly coupled to the master device, and the coupling path is V-V4-S2-S2, K-K4-B2-B2, Q-Q4-R2-R2. The slave code D5 is the slave device fifthly coupled to the master device, and the coupling path is V-V4-S1, K-K4-B1, Q-Q4-R1. The slave code D6 is the slave device sixthly coupled to the master device, and the coupling path is V-V4-S1-S4, K-K4-B1-B4, Q-Q4-R1-R4. The slave code D7 is the slave device seventhly coupled to the master device, and the coupling path is V-V4-S1-S3, K-K4-B1-B3, Q-Q4-R1-R3.

The master device 10 can further include a plurality of master bus-bars 18. In this embodiment, the plurality of master bus-bars 18 include a top bus-bar, a bottom bus-bar, a left bus-bar, and a right bus-bar, each master bus-bar 18 includes a plurality of master multimedia ports, which include the master multimedia top port 141, the master multimedia bottom port 142, the master multimedia left port 143, and the master multimedia right port 144; a plurality of master USB ports, which include the master USB top port 341, the master USB bottom port 342, the master USB left port 343, and the master USB right port 344; a plurality of master control ports, which include the master control top port 441, the master control bottom port 442, the master control left port 443, and the master control right port 444, configured to couple the slave devices 20 and the master device 10; and a plurality of master power ports, which include the master power top port 161, the master power bottom port 162, the master power left port 163, and the master power right port 164. The types of ports in each master bus-bar 18 can include HDMI, DP, USB, type-C, DC power port, e-SATA, PCIE, MHL, LVDS, V by one, mipi, etc..

Correspondingly, each slave device 20 can further include a plurality of slave bus-bars 28. In this embodiment, the plurality of slave bus-bars 28 include a top bus-bar, a bottom bus-bar, a left bus-bar, and a right bus-bar, each slave bus-bar 28 includes a plurality of slave multimedia ports, which include the slave multimedia top port 241, the slave multimedia bottom port 242, the slave multimedia left port 243, and the slave multimedia right port 244; a plurality of slave USB ports, which include the slave USB top port 641, the slave USB bottom port 642, the slave USB left port 643, and the slave USB right port 644; a plurality of slave control ports, which include the slave control top port 741, the slave control bottom port 742, the slave control left port 743, and the slave control right port 744, configured to couple the slave devices 20 and the master device 10; and a plurality of slave power ports, which include the slave power top port 361, the slave power bottom port 362, the slave power left port 363, and the slave power right port 364. The types of ports in each slave bus-bar 28 can include HDMI, DP, USB, type-C, DC power port, e-SATA, PCIE, MHL, LVDS, V by one, mipi, etc..

Each electronic device can further comprises a power node PO. In the master device 10, the power node PO is coupled between the first end of each power switch path and the local power switch 160. In the slave device 20, the power node PO is coupled between the second terminal of the slave local power switch module 36 and the first end of each power switch path. The power node PO is configured to couple to an external power supply to receive power from the external power supply to supply the power for the last coupled slave device when a rated power of the master device 10 is lower than the total power of all the coupled slave devices. The rated power of the external power supply can be added into the rated power of the master device 10 and the master device 10 can further supply other slave device coupled to the last coupled slave device.

The slave control module 23 of each slave device 20 can be a micro control unit (MCU), and the slave function module 27 can include a display module, an audio muddle, etc. controlled by the MCU.

The slave control module 23 can include a slave control unit 231 and a slave storage unit 233. The slave storage unit 233 can include a slave information storage CA, a master code storage CC, a soft code storage CB, a master information storage C1, a local power storage C2, a residual power storage C3, and a sub-slave code storage C4.

The slave control unit 231 is coupled to the slave control modules 23 of all the slave device 20 coupled together and the maser control module 13 of the master device 10 and configured to obtain all the information of the master device 10 and store the information to corresponding storages. The slave control unit 231 sets a group master codes according to a coupling sequence of the coupled master devices 10 and the stores the master codes to the master code storage CC.

The slave information storage CA is configured to store the slave local information. The slave local information can include address code, such as ID code and IP code, device model, such as iphone 6s, I/O type, and slave soft control code etc.. The slave soft control code can include brightness adjustment control code, channel adjustment control code, volume adjustment control code, power on/off etc..

When each slave device 10 is inserted to the master device 10 directly or indirectly, the master device 10 is matched to the inserted slave device 20, and the slave devices 20 inserted together are also matched to other slave devices 20.

The master code storage CC is configured to store master codes and coupling paths corresponding to each master device 10. When one of the slave device is coupled to a matched master device, a corresponding coupling path is switched on.

The soft code storage CB is configured to store the soft code of each master device 10.

The master information storage C1 is configured to store the slave information of each master device 10. The master information include address code, such as ID code and IP code, device model, such as iphone 6s, I/O type etc..

The local power storage C2 is configured to store rated power of the local slave device 20.

The residual power storage C3 is configured to store a residual power of the master device 10. The residual power of the master device 10 is equal to that the rated power of the master device 10 minus the total power of all the coupled slave devices 20.

The sub-slave code storage C4 is configured to store sub-slave codes coupled the local slave device and coupling paths corresponding each sub-slave device.

Each slave device 20 further includes a detection module 22 configured to compare the residual power of the master device 10 with the local rated power of the slave device 20. When the residual power of the master device 10 is lower than the local rated power, the detection module 22 sends a break signal to the slave control module 23 to cut off the slave local power switch and the sub-slave power switch. In this position, the external power supply can be operated to supply power to the slave device 20 via the power node PO. The rated power of the external power supply is added to the residual power of the master device 10, and a new residual power of the master device 10 and a new total rated power of the master device 10 are restored in corresponding storage unit. In at least one embodiment, the external power supply can be coupled to the power node of the last slave device to supply power for the last slave device and next inserted slave device. In other embodiment, the external power supply can be coupled to the power node of any slave device to supply power for the last slave device and next inserted slave device. When the external power supply is coupled to the power node of any slave device except the last slave device, the detection module 22 compares the residual power of the master device 10 with the last slave device 20 again.

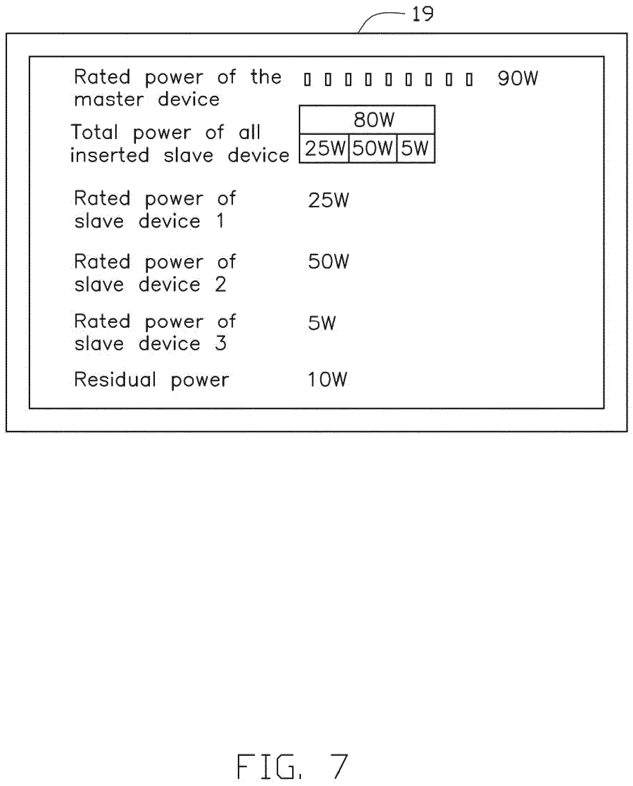

FIG. 7 illustrates the display module 19 of the master device 10 showing the rated power of the master device 10, the total power of all the coupled slave devices, rated power of each coupled slave device, and an overload remind, which shows the residual power of the master device 10.

When one of the slave devices 20 is needed to couple to the master device 10, a coupling key is pressed, the slave multimedia switch module 24 is switched to the fifth multimedia switch path K5 to couple to the slave control module 23, slave USB switch module 64 is switched to the fifth USB switch path B5 to couple to the slave control module 23. The slave control module 23 sends a coupling command to the master device 10. The coupling key can be a touch button or a physical button. The mater device 10 identifies the coupling command, the corresponding slave code, and corresponding coupling paths, so that controls the switch modules to switch on corresponding ports according to the identified corresponding coupling paths and further controls the soft control code of the master device 10 to couple to the soft function code of the slave code 20. Thus, the slave device 10 is coupled to the master device 10. The master device 10 can receive multimedia information from the slave device 20 and display the multimedia information in the display module 19, the hard disk drive 500 can be a storage device of the slave device 20, and the input devices can simultaneously control the master device 10 and the slave device 20.

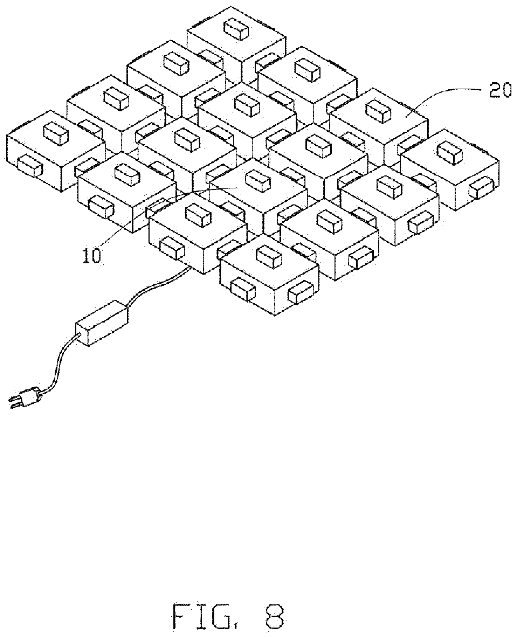

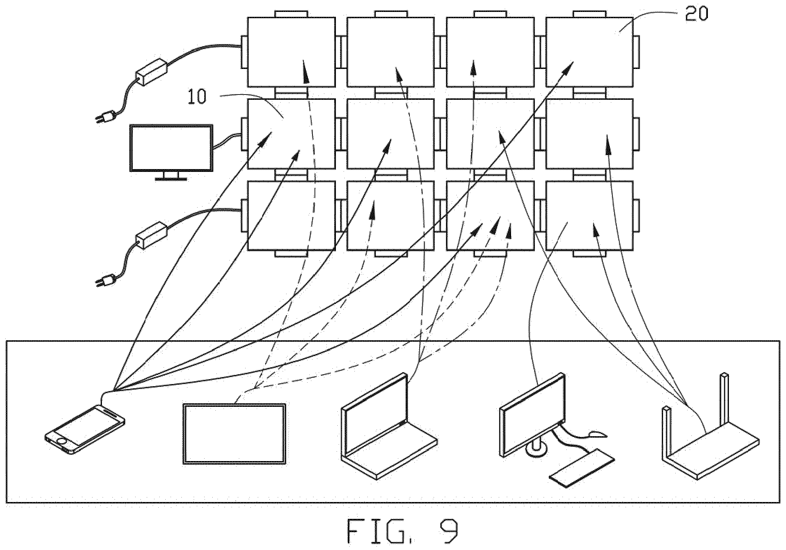

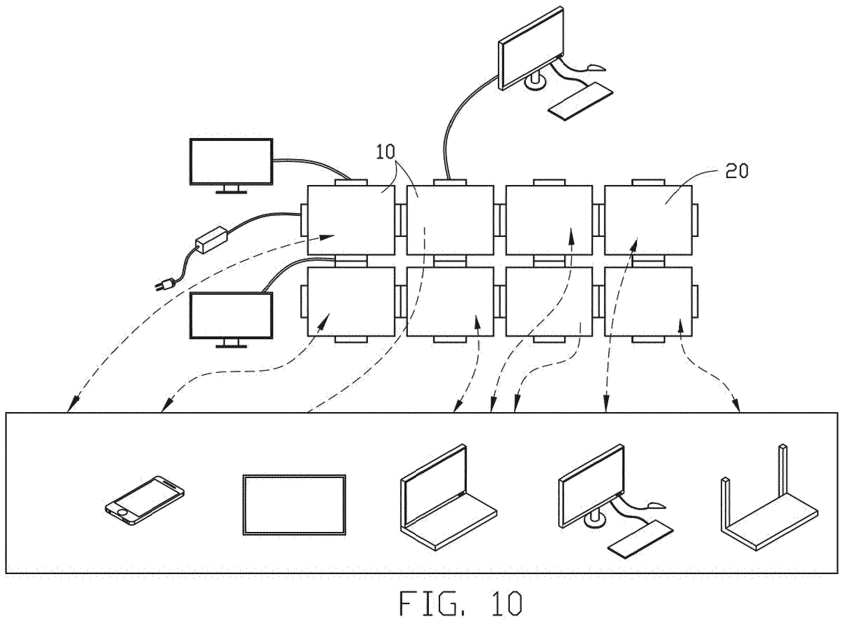

FIGS. 8-10 illustrate that each slave device 20 can be a new master device. The sub-slave code storage C4 stores sub-slave codes coupled to the local slave device and coupling paths corresponding each sub-slave device. Thus, when the slave device 20 is taken as a new master device, the slave device 20 can couple to other device according to the sub-slave codes and coupling paths.

When one of the slave devices 20 is coupled to the master device 10, other slave devices 20 can couple to each other. The electronic device coupling system can has a plurality of electronic group systems, each electronic group system has a group maser device and at least one group slave device. The group master device can be the master device 10 or any slave device 20. For example, the electronic device coupling system can include a first electronic group system G1 having a first group maser device 10 and a first group slave device D1; a second electronic group system G2 having a second group maser device D2 and two second group slave devices D2 and D3; and a third electronic group system G3 having a third group maser device D4 and three third group slave devices D5-D7. Each slave device can couple to the master device by pressing the coupling key, and the master device 10 can also click any slave device to couple to the corresponding slave device 20.

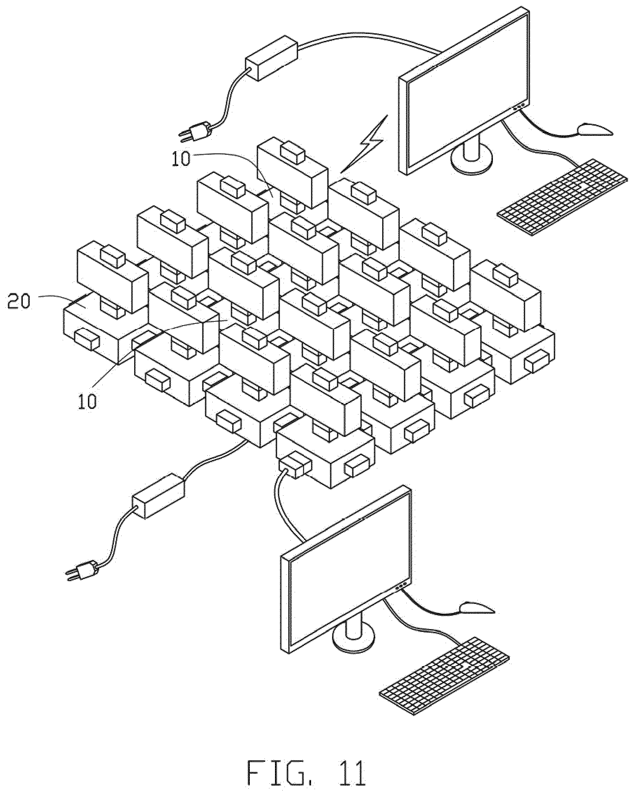

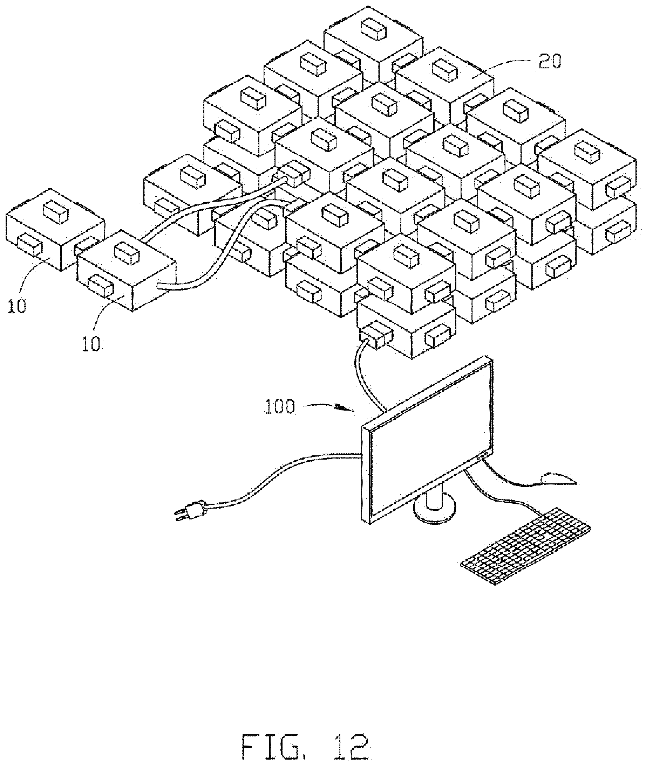

FIGS. 11-12 illustrate that an independent public device can include the display module 19, the mouse, the keyboard, and the hard disk drive and couple to one or more slave devices to consist a customization group. The one or more slave devices can include a computer host and a wifi module; a TV host; or a computer host, a Bluetooth module, and a wifi module. When the one or more slave devices are chosen by the public device, the corresponding switch paths are switched on to integrally couple to the public device.

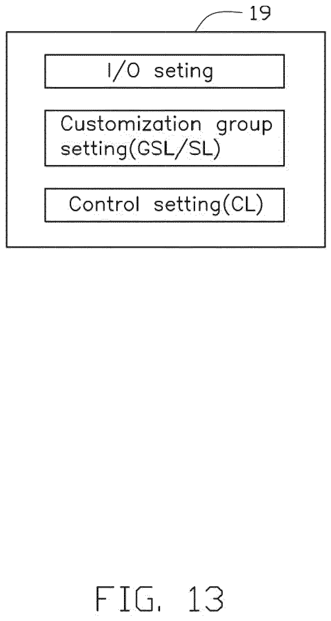

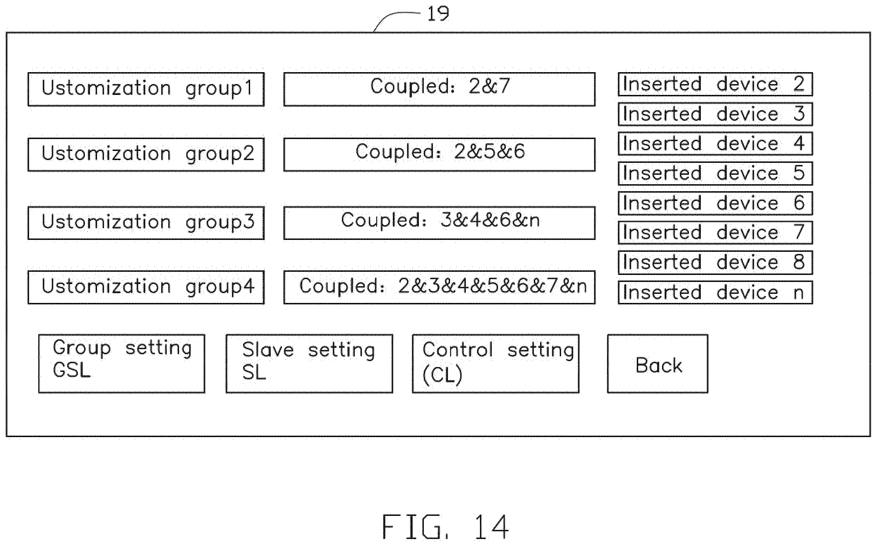

FIGS. 13-14 illustrate that the display module 19 has a switch interface, which shows an I/O format button, a GSL/SL button, and a CL button. The I/O format button can be touched to access into a customization group setting interface (shown as in FIG. 14). In this position, the master device reads and stores slave devices information into local corresponding storages, and each slave device reads and stores master device information and other slave devices information into local corresponding storages.

The GSL/SL button is configured to access into a customization group coupling interface and create a customization group code. The CL button is configured to couple the last slave device inserted to the master device.

When the GSL button is clicked, the display module 19 displays a window showing a customization group code 1. When the SL button is clicked, the display module 19 displays all the matched slave device codes, each matched slave device codes can be clicked to add into the customization group, when the SL button is further clicked, the matched slave devices are added into the customization group. When the GSL button is further clicked, all the devices in the customization group are coupled to the public device.

When the customization group is needed to change, the GSL button is clicked, the display module 19 displays the window showing the customization group code 1. The SL button is clicked, the display module 19 displays all the matched slave device codes, each matched slave device codes can be clicked to add into or deleted from the customization group, when the SL button is further clicked, the new slave devices are added into the customization group.

When a new customization group is needed to create, the GSL button is clicked, the display module 19 displays a new window showing a new customization group code 2.

The embodiments shown and described above are only examples. Many details are often found in the art such as the other features of an electronic device coupling system and method. Therefore, many such details are neither shown nor described. Even though numerous characteristics and advantages of the present technology have been set forth in the foregoing description, together with details of the structure and function of the present disclosure, the disclosure is illustrative only, and changes may be made in the detail, including in matters of shape, size, and arrangement of the parts within the principles of the present disclosure, up to and including the full extent established by the broad general meaning of the terms used in the claims. It will therefore be appreciated that the embodiments described above may be modified within the scope of the claims.

## Claims

1. An electronic device coupling system, the system comprising:
a plurality of electronic devices comprising:
a master device (10); and
a plurality of slave devices (20) capable of inserting to the master device (10) one by one;
wherein each electronic device comprises a hot plug detection module (12) configured to detect an insertion between two electronic devices and a plurality of coupling bus-bars, each coupling bus-bar has a plurality of types coupling ports, the plurality of coupling bus-bars is arranged on at least three different directions, and each coupling port of any coupling bus-bar in any electronic device is capable of inserting into a corresponding coupling port in another electronic device; the plurality of coupling bus-bars is a plurality of pairings of male and female coupling bus-bars; **characterised in that** the hot plug module (12) includes a pull-down resistor coupled to a male coupling bar and a pull-up resistor coupled to a female coupling bar, each slave device (20) is a socket structure.

2. The electronic device coupling system of claim 1, wherein the master device is capable of being inserted with a plurality of slave devices (20) in any direction of the at least three different directions, and each inserted slave device (20) is capable of being inserted with a plurality of other slave devices (20) in any direction of the at least three different directions.

3. The electronic device coupling system of claim 1, wherein each electronic device comprises a control module (13/23), a control bus, and a storage unit (133/233), the storage unit (133/233) stores all the information of local electronic device.

4. The electronic device coupling system of claim 1, wherein each electronic device has a sequence number according to an insertion sequence, the sequence number is corresponds to all the information of local electronic device, the sequence numbers of the plurality of electronic devices are sorted according to the insertion sequence, and the sequence number of the master device is a first number of the sequence.

5. The electronic device coupling system of claim 3, wherein the plurality of types coupling ports of the coupling bus-bar corresponding to the hot plug detection module (12) are configured to be switched on when the hot plug detection module (12) detects the insertion between two electronic devices.

6. The electronic device coupling system of claim 5, wherein each electronic device further comprises a plurality of switch modules (14, 16, 24, 34, 36, 56, 64), and each switch module (14, 16, 24, 34, 36, 56, 64) is corresponding to a type of coupling port; each switch module (14, 16, 24, 34, 36, 56, 64) comprises a plurality of switch paths each corresponding to each of the plurality of coupling bus-bars; and when the hot plug detection module (12) detects the insertion between two electronic devices, the switch path of each switch module (14, 16, 24, 34, 36, 56, 64) corresponding to the coupling bus-bar, which is corresponding to the detected hot plug detection module (12) is configured to be switched on.

7. The electronic device coupling system of claim 6, wherein the types of coupling ports comprise HDMI, DP, USB, type-C, and DC power.

8. The electronic device coupling system of claim 6, wherein each electronic device further comprises a function module (17/27), and a coupling key coupled to a local control module, each slave device (20) is coupleable to the master device (10) through the control module by pressing the coupling key, and each switch path is coupled to the local control module and a local function module (17/27).

9. An electronic device coupling system, the system comprising:
a plurality of electronic devices comprising:
a master device (10);
another master device (10); and
a plurality of slave devices (20) capable of inserting to the master device (10) one by one;
wherein each electronic device comprises a hot plug detection module (12) configured to detect an insertion between two electronic devices and a plurality of coupling bus-bars, each coupling bus-bar has a plurality of types coupling ports, the plurality of coupling bus-bars is arranged on at least three different directions, the plurality of coupling bus-bars are a plurality of pairings of male and female coupling bus-bars, and each coupling port of any coupling bus-bar in any electronic device is capable of inserting into a corresponding coupling port in another electronic device; and the another master device is coupleable to any slave device (20), which is not coupled to the master device (10); **characterised in that** the hot plug module (12) includes a pull-down resistor coupled to a male coupling bar and a pull-up resistor coupled to a female coupling bar, each slave device (20) is a socket structure.

10. The electronic device coupling system of claim 9, wherein the master device (10) is capable of being inserted with a plurality of slave devices (20) in any direction of the at least three different directions, and each inserted slave device (20) is capable of being inserted with a plurality of other slave devices (20) in any direction of the at least three different directions.

11. The electronic device coupling system of claim 9, wherein each electronic device comprises a control module (13/23), a control bus, and a storage unit (133/233), the storage unit (133/233) stores all the information of local electronic device.

12. The electronic device coupling system of claim 9, wherein the plurality of types coupling ports of the coupling bus-bar corresponding to the hot plug detection module (12) are configured to be switched on when the hot plug detection module (12) detects the insertion between two electronic devices.

13. The electronic device coupling system of claim 12, wherein each electronic device further comprises a plurality of switch modules (14, 16, 24, 34, 36, 56, 64), and each switch module (14, 16, 24, 34, 36, 56, 64) is corresponding to a type of coupling port; each switch module (14, 16, 24, 34, 36, 56, 64) comprises a plurality of switch paths each corresponding to each of the plurality of coupling bus-bars; and when the hot plug detection module (12) is configured to detect the insertion between two electronic devices, the switch path of each switch module (14, 16, 24, 34, 36, 56, 64) corresponding to the coupling bus-bar, which is corresponding to the detected hot plug detection module (12) is configured to be switched on.

14. The electronic device coupling system of claim 13, wherein each electronic device further comprises a function module (17/27), and a coupling key coupled to a local control module, each slave device (20) is coupleable to the master device (10) through the control module (13/23) by pressing the coupling key, and each switch path is coupled to the local control module and a local function module (17/27).

15. The electronic device coupling system of claim 14, wherein each coupling bus-bar is wirelessly coupled to another coupling bus-bar.

## Patentansprüche

1. Kopplungssystem für elektronische Vorrichtungen, wobei das System umfasst:
eine Vielzahl von elektronischen Vorrichtungen, umfassend:
eine Master-Vorrichtung (10); und
eine Vielzahl von Slave-Vorrichtungen (20), die in der Lage sind, eine nach der anderen in die Master-Vorrichtung (10) eingesteckt zu werden;
wobei jede elektronische Vorrichtung ein Hot-Plug-Detektionsmodul (12) umfasst, das dazu konfiguriert ist, ein Einstecken zwischen zwei elektronischen Vorrichtungen zu erkennen, und eine Vielzahl von Kopplungs-Busschienen, jede Kopplungs-Busschiene eine Vielzahl von Typen-Kopplungsanschlüssen aufweist, die Vielzahl von Kopplungs-Busschienen an mindestens drei verschiedenen Richtungen angeordnet sind, und jeder Kopplungsanschluss jeder Kopplungs-Busschiene in jeder elektronischen Vorrichtung in der Lage ist, in einen entsprechenden Kopplungsanschluss in einer anderen elektronischen Vorrichtung eingesteckt zu werden; die Vielzahl von Kopplungs-Busschienen eine Vielzahl von Paaren männlicher und weiblicher Kopplungs-Busschienen sind; **dadurch gekennzeichnet, dass** das Hot-Plug-Modul (12) einen Pull-Down-Widerstand einschließt, der mit einer männlichen Kopplungsschiene gekoppelt ist, und einen Pull-Up-Widerstand, der mit einer weiblichen Kopplungsschiene gekoppelt ist, jede Slave-Vorrichtung (20) eine Buchsenstruktur ist.

2. Kopplungssystem für elektronische Vorrichtungen nach Anspruch 1, wobei die Master-Vorrichtung in der Lage ist, in jeder Richtung aus den mindestens drei verschiedenen Richtungen mit einer Vielzahl von Slave-Vorrichtungen (20) zusammengesteckt zu werden, und jede eingesteckte Slave-Vorrichtung (20) in der Lage ist, in jeder Richtung aus den mindestens drei verschiedenen Richtungen mit einer Vielzahl von anderen Slave-Vorrichtungen (20) zusammengesteckt zu werden.

3. Kopplungssystem für elektronische Vorrichtungen nach Anspruch 1, wobei jede elektronische Vorrichtung ein Steuermodul (13/23), einen Steuerbus und eine Speichereinheit (133/233) umfasst, die Speichereinheit (133/233) alle die Informationen der lokalen elektronischen Vorrichtungen speichert.

4. Kopplungssystem für elektronische Vorrichtungen nach Anspruch 1, wobei jede elektronische Vorrichtung eine Folgenummer gemäß einer Einsteckfolge aufweist, die Folgenummer allen den Informationen einer lokalen elektronischen Vorrichtung entspricht, die Folgenummern der Vielzahl von elektronischen Vorrichtungen gemäß der Einsteckfolge sortiert sind, und die Folgenummer der Master-Vorrichtung eine erste Nummer der Folge ist.

5. Kopplungssystem für elektronische Vorrichtungen nach Anspruch 3, wobei die Vielzahl von Typen-Kopplungsanschlüssen der Kopplungs-Busschiene, die dem Hot-Plug-Detektionsmodul (12) entsprechen, so konfiguriert sind, dass sie eingeschaltet werden, wenn das Hot-Plug-Detektionsmodul (12) das Einstecken zwischen zwei elektronischen Vorrichtungen erkennt.

6. Kopplungssystem für elektronische Vorrichtungen nach Anspruch 5, wobei jede elektronische Vorrichtung weiter eine Vielzahl von Schaltmodulen (14, 16, 24, 34, 36, 56, 64) umfasst, und jedes Schaltmodul (14, 16, 24, 34, 36, 56, 64) einem Typ von Kopplungsanschluss entspricht; jedes Schaltmodul (14, 16, 24, 34, 36, 56, 64) eine Vielzahl von Schaltstrecken umfasst, die jede jeder aus der Vielzahl von Kopplungs-Busschienen entsprechen; und die Schaltstrecke jedes Schaltmoduls (14, 16, 24, 34, 36, 56, 64), die der Kopplungs-Busschiene entspricht, welche dem erkannten Hot-Plug-Detektionsmodul (12) entspricht, so konfiguriert ist, dass sie eingeschaltet wird, wenn das Hot-Plug-Detektionsmodul (12) das Einstecken zwischen zwei elektronischen Vorrichtungen erkennt.

7. Kopplungssystem für elektronische Vorrichtungen nach Anspruch 6, wobei die Typen von Kopplungsanschlüssen HDMI, DP, USB, Typ-C und Gleichstrom umfassen.

8. Kopplungssystem für elektronische Vorrichtungen nach Anspruch 6, wobei jede elektronische Vorrichtung weiter ein Funktionsmodul (17/27) umfasst, und eine Kopplungstaste, die mit einem lokalen Steuermodul gekoppelt ist, jede Slave-Vorrichtung (20) über das Steuermodul durch Drücken der Kopplungstaste mit der Master-Vorrichtung (10) koppelbar ist, und jede Schaltstrecke mit dem lokalen Steuermodul und einem lokalen Funktionsmodul (17/27) gekoppelt ist.

9. Kopplungssystem für elektronische Vorrichtungen, wobei das System umfasst:
eine Vielzahl von elektronischen Vorrichtungen, umfassend:
eine Master-Vorrichtung (10);
eine andere Mastervorrichtung (10); und
eine Vielzahl von Slave-Vorrichtungen (20), die in der Lage sind, eine nach der anderen in die Master-Vorrichtung (10) eingesteckt zu werden;
wobei jede elektronische Vorrichtung ein Hot-Plug-Detektionsmodul (12) umfasst, das dazu konfiguriert ist, ein Einstecken zwischen zwei elektronischen Vorrichtungen zu erkennen, und eine Vielzahl von Kopplungs-Busschienen, jede Kopplungs-Busschiene eine Vielzahl von Typen-Kopplungsanschlüssen aufweist, die Vielzahl von Kopplungs-Busschienen an mindestens drei verschiedenen Richtungen angeordnet ist, die Vielzahl von Kopplungs-Busschienen eine Vielzahl von Paaren männlicher und weiblicher Kopplungs-Busschienen sind, und jeder Kopplungsanschluss jeder Kopplungs-Busschiene in jeder elektronischen Vorrichtung in der Lage ist, in einen entsprechenden Kopplungsanschluss in einer anderen elektronischen Vorrichtung eingesteckt zu werden; und die andere Mastervorrichtung mit jeder Slave-Vorrichtung (20) koppelbar ist, die nicht mit der Master-Vorrichtung (10) gekoppelt ist; **dadurch gekennzeichnet, dass** das Hot-Plug-Modul (12) einen Pull-Down-Widerstand einschließt, der mit einer männlichen Kopplungsschiene gekoppelt ist, und einen Pull-Up-Widerstand, der mit einer weiblichen Kopplungsschiene gekoppelt ist, jede Slave-Vorrichtung (20) eine Buchsenstruktur ist.

10. Kopplungssystem für elektronische Vorrichtungen nach Anspruch 9, wobei die Master-Vorrichtung (10) in der Lage ist, in jeder Richtung aus den mindestens drei verschiedenen Richtungen mit einer Vielzahl von Slave-Vorrichtungen (20) zusammengesteckt zu werden, und jede eingesteckte Slave-Vorrichtung (20) in der Lage ist, in jeder Richtung aus den mindestens drei verschiedenen Richtungen mit einer Vielzahl von anderen Slave-Vorrichtungen (20) zusammengesteckt zu werden.

11. Kopplungssystem für elektronische Vorrichtungen nach Anspruch 9, wobei jede elektronische Vorrichtung ein Steuermodul (13/23), einen Steuerbus und eine Speichereinheit (133/233) umfasst, die Speichereinheit (133/233) alle die Informationen der lokalen elektronischen Vorrichtungen speichert.

12. Kopplungssystem für elektronische Vorrichtungen nach Anspruch 9, wobei die Vielzahl von Typen-Kopplungsanschlüssen der Kopplungs-Busschiene, die dem Hot-Plug-Detektionsmodul (12) entsprechen, so konfiguriert sind, dass sie eingeschaltet werden, wenn das Hot-Plug-Detektionsmodul (12) das Einstecken zwischen zwei elektronischen Vorrichtungen erkennt.

13. Kopplungssystem für elektronische Vorrichtungen nach Anspruch 12, wobei jede elektronische Vorrichtung weiter eine Vielzahl von Schaltmodulen (14, 16, 24, 34, 36, 56, 64) umfasst, und jedes Schaltmodul (14, 16, 24, 34, 36, 56, 64) einem Typ von Kopplungsanschluss entspricht; jedes Schaltmodul (14, 16, 24, 34, 36, 56, 64) eine Vielzahl von Schaltstrecken umfasst, die jede jeder aus der Vielzahl von Kopplungs-Busschienen entsprechen; und wenn das Hot-Plug-Detektionsmodul (12) so konfiguriert ist, dass es das Einstecken zwischen zwei elektronischen Vorrichtungen erkennt, die Schaltstrecke jedes Schaltmoduls (14, 16, 24, 34, 36, 56, 64), die der Kopplungs-Busschiene entspricht, welche dem erkannten Hot-Plug-Detektionsmodul (12) entspricht, so konfiguriert ist, dass sie eingeschaltet wird.

14. Kopplungssystem für elektronische Vorrichtungen nach Anspruch 13, wobei jede elektronische Vorrichtung weiter ein Funktionsmodul (17/27) umfasst, und eine Kopplungstaste, die mit einem lokalen Steuermodul gekoppelt ist, jede Slave-Vorrichtung (20) über das Steuermodul (13/23) durch Drücken der Kopplungstaste mit der Master-Vorrichtung (10) koppelbar ist, und jede Schaltstrecke mit dem lokalen Steuermodul und einem lokalen Funktionsmodul (17/27) gekoppelt ist.

15. Kopplungssystem für elektronische Vorrichtungen nach Anspruch 14, wobei jede Kopplungs-Busschiene drahtlos mit einer anderen Kopplungs-Busschiene gekoppelt ist.

## Revendications

1. Système de couplage de dispositif électronique, le système comprenant :
une pluralité de dispositifs électroniques comprenant :
un dispositif maître (10) ; et
une pluralité de dispositifs esclaves (20) capables d'insertion sur le dispositif maître (10) un par un ;
dans lequel chaque dispositif électronique comprend un module de détection de connexion à chaud (12) configuré pour détecter une insertion entre deux dispositifs électroniques et une pluralité de barres omnibus de couplage, chaque barre omnibus de couplage a une pluralité de types de ports de couplage, la pluralité de types de ports de couplage est agencée sur au moins trois directions différentes, et chaque port de couplage de n'importe quelle barre omnibus dans n'importe quel dispositif électronique est capable d'insertion dans un port de couplage correspondant dans un autre dispositif électronique; la pluralité de barres omnibus de couplage est une pluralité d'appariements de barres omnibus de couplage mâle et femelle ; **caractérisé en ce que** le module de connexion à chaud (12) comprend une résistance d'excursion basse couplée à une barre de couplage mâle et une résistance d'excursion haute couplée à une barre de couplage femelle, chaque dispositif esclave (20) est une structure de prise.

2. Système de couplage de dispositif électronique selon la revendication 1, dans lequel le dispositif maître est capable d'être inséré avec une pluralité de dispositifs esclaves (20) dans n'importe quelle direction des au moins trois directions différentes, et chaque dispositif esclave inséré (20) est capable d'être inséré avec une pluralité d'autres dispositifs esclaves (20) dans n'importe quelle direction des au moins trois directions différentes.

3. Système de couplage de dispositif électronique selon la revendication 1, dans lequel chaque dispositif électronique comprend un module de commande (13/23), un bus de commande et une unité de stockage (133/233), l'unité de stockage (133/233) stocke toutes les informations de dispositif électronique local.

4. Système de couplage de dispositif électronique selon la revendication 1, dans lequel chaque dispositif électronique a un numéro de séquence en fonction d'une séquence d'insertion, le numéro de séquence correspond à toutes les informations de dispositif électronique local, les numéros de séquence de la pluralité de dispositifs électroniques sont triés en fonction de la séquence d'insertion, et le numéro de séquence du dispositif maître est un premier numéro de la séquence.

5. Système de couplage de dispositif électronique selon la revendication 3, dans lequel la pluralité de types de ports de couplage de la barre omnibus de couplage correspondant au module de détection de connexion à chaud (12) est configurée pour être activée quand le module de détection de connexion à chaud (12) détecte l'insertion entre deux dispositifs électroniques.

6. Système de couplage de dispositif électronique selon la revendication 5, dans lequel chaque dispositif électronique comprend en outre une pluralité de modules de commutation (14, 16, 24, 34, 36, 56, 64) et chaque module de commutation (14, 16, 24, 34, 36, 56, 64) est correspondant à un type de port de couplage ; chaque module de commutation (14, 16, 24, 34, 36, 56, 64) comprend une pluralité de chemins de commutation correspondant chacun à chacune de la pluralité de barres omnibus de couplage; et, quand le module de détection de connexion à chaud (12) détecte l'insertion entre deux dispositifs électroniques, le chemin de commutation de chaque module de commutation (14, 16, 24, 34, 36, 56, 64) correspondant à la barre omnibus de couplage, qui est correspondante au module de détection de connexion à chaud (12) détecté, est configuré pour être activé.

7. Système de couplage de dispositif électronique selon la revendication 6, dans lequel les types de ports de couplage comprennent HDMI, DP, USB, type C et alimentation en courant continu.

8. Système de couplage de dispositif électronique selon la revendication 6, dans lequel chaque dispositif électronique comprend en outre un module de fonction (17/27) et une touche de couplage couplée à un module de commande local, chaque dispositif esclave (20) peut être couplé au dispositif maître (10) par le biais du module de commande en appuyant sur la touche de couplage, et chaque chemin de commutation est couplé au module de commande local et à un module de fonction local (17/27).

9. Système de couplage de dispositif électronique, le système comprenant :
une pluralité de dispositifs électroniques comprenant :
un dispositif maître (10) ;
un autre dispositif maître (10) ; et
une pluralité de dispositifs esclaves (20) capables d'insertion sur le dispositif maître (10) un par un ;
dans lequel chaque dispositif électronique comprend un module de détection de connexion à chaud (12) configuré pour détecter une insertion entre deux dispositifs électroniques et une pluralité de barres omnibus de couplage, chaque barre omnibus de couplage a une pluralité de types de ports de couplage, la pluralité de types de ports de couplage est agencée sur au moins trois directions différentes, la pluralité de barres omnibus de couplage est une pluralité d'appariements de barres omnibus de couplage mâle et femelle et chaque port de couplage de n'importe quelle barre omnibus de couplage dans n'importe quel dispositif électronique est capable d'insertion dans un port de couplage correspondant dans un autre dispositif électronique; et l'autre dispositif maître peut être couplé à n'importe que dispositif esclave (20), qui n'est pas couplé au dispositif maître (10) ; **caractérisé en ce que** le module de connexion à chaud (12) comprend une résistance d'excursion basse couplée à une barre de couplage mâle et une résistance d'excursion haute couplée à une barre de couplage femelle, chaque dispositif esclave (20) est une structure de prise.

10. Système de couplage de dispositif électronique selon la revendication 9, dans lequel le dispositif maître (10) est capable d'être inséré avec une pluralité de dispositifs esclaves (20) dans n'importe quelle direction des au moins trois directions différentes, et chaque dispositif esclave inséré (20) est capable d'être inséré avec une pluralité d'autres dispositifs esclaves (20) dans n'importe quelle direction des au moins trois directions différentes.

11. Système de couplage de dispositif électronique selon la revendication 9, dans lequel chaque dispositif électronique comprend un module de commande (13/23), un bus de commande et une unité de stockage (133/233), l'unité de stockage (133/233) stocke toutes les informations de dispositif électronique local.

12. Système de couplage de dispositif électronique selon la revendication 9, dans lequel la pluralité de types de ports de couplage de la barre omnibus de couplage correspondant au module de détection de connexion à chaud (12) est configurée pour être activée quand le module de détection de connexion à chaud (12) détecte l'insertion entre deux dispositifs électroniques.

13. Système de couplage de dispositif électronique selon la revendication 12, dans lequel chaque dispositif électronique comprend en outre une pluralité de modules de commutation (14, 16, 24, 34, 36, 56, 64) et chaque module de commutation (14, 16, 24, 34, 36, 56, 64) est correspondant à un type de port de couplage ; chaque module de commutation (14, 16, 24, 34, 36, 56, 64) comprend une pluralité de chemins de commutation correspondant chacun à chacune de la pluralité de barres omnibus de couplage; et, quand le module de détection de connexion à chaud (12) détecte l'insertion entre deux dispositifs électroniques, le chemin de commutation de chaque module de commutation (14, 16, 24, 34, 36, 56, 64) correspondant à la barre omnibus de couplage, qui est correspondante au module de détection de connexion à chaud (12) détecté, est configuré pour être activé.

14. Système de couplage de dispositif électronique selon la revendication 13, dans lequel chaque dispositif électronique comprend en outre un module de fonction (17/27) et une touche de couplage couplée à un module de commande local, chaque dispositif esclave (20) peut être couplé au dispositif maître (10) par le biais du module de commande (13/23) en appuyant sur la touche de couplage, et chaque chemin de commutation est couplé au module de commande local et à un module de fonction local (17/27).

15. Système de couplage de dispositif électronique selon la revendication 14, dans lequel chaque barre omnibus de couplage est couplée sans fil à une autre barre omnibus de couplage.
